# EUROPEAN PATENT APPLICATION

(11) **EP 2 725 854 A1**
(43) Date of publication of application: **30.04.2014**
(21) Application number: 13189415.6
(22) Date of filing: 18.10.2013
(51) Int. Cl.: H04W 52/24, H04W 52/36, H04W 52/38, H04W 52/20

(54) **Method for controlling transmit power in wireless local area network, controller, and access point**

(30) Priority: 26.10.2012 CN 201210417328
(71) Applicant: Huawei Technologies Co., Ltd., Shenzhen, Guangdong 518129 (CN)
(72) Inventor: Wang, Yungui, Shenzhen Guangdong 518129 (CN)
(74) Representative: Isarpatent

(57) **Abstract**

The present invention provides a method for controlling a transmit power in a wireless local area network, a controller, and an access point, including: determining, by a controller, a transmit power range of a radio frequency unit of a first access point AP; determining, by the controller, a packet reception and transmission parameter of each user link of the radio frequency unit according to packet reception and transmission information of the radio frequency unit reported by the first AP; and configuring, by the controller, a transmit power for each user link of the radio frequency unit within the transmit power range according to the determined packet reception and transmission parameter of each user link of the radio frequency unit. Signal interference between devices in a WLAN is reduced while concurrent data transmission capability of the AP is not reduced, thereby improving system transmission performance of the WLAN.

## Description

### TECHNICAL FIELD

The present invention belongs to the field of wireless communication technologies, and in particular, to a method for controlling a transmit power in a wireless local area network (Wireless Local Area Network, WLAN), a controller, and an access point (Access Point, AP).

### BACKGROUND

With the rapid development of wireless communication technologies, WLANs based on the 802.11 standard series of the Institute of Electrical and Electronics Engineers (Institute of Electrical and Electronics Engineers, IEEE) of the United States are widely used in areas such as homes, offices, and public places. Because adjacent channels of wireless frequency spectrums overlap partially, in a WLAN where a large number of APs are deployed, mutual interference occurs definitely between the APs, resulting in a failure in receiving and transmitting data. To avoid the interference (or to increase coverage), a transmit power change (Transmit Power Change, TPC) is generally performed.

An existing TPC solution performs a transmit power change only on each AP that accesses the same access controller (Access Controller, AC). However, when an AP 1 and an AP 2 both perform data transmission with their respective users at a farthest end within their respective coverage scopes, the coverage areas of the AP 1 and the AP 2 overlap heavily, and mutual interference occurs between the two APs. When the AP 1 and the AP 2 both perform data transmission with their respective users at a short distance thereto, the coverage areas of the two APs do not overlap, and no mutual interference is caused. However, it is obvious that the existing TPC solution cannot perform TPC with respect to different data transmission scenarios between APs and users, and may only uniformly change transmit powers of the APs, which reduces concurrent data transmission capability of APs thereby reducing system transmission performance of the WLAN.

### SUMMARY

An objective of the present invention is to provide a method for controlling a transmit power in a wireless local area network, a controller, and an access point to solve the problem that the existing TPC solution may only uniformly change transmit powers of APs, which reduces concurrent data transmission capability of the APs and results in lower system transmission performance of a WLAN.

In a first aspect, a method for controlling a transmit power in a wireless local area network includes: determining, by a controller, a transmit power range of a radio frequency unit of a first access point AP; determining, by the controller, a packet reception and transmission parameter of each user link of the radio frequency unit according to packet reception and transmission information of the radio frequency unit reported by the first AP; and configuring, by the controller, a transmit power for each user link of the radio frequency unit within the transmit power range according to the determined packet reception and transmission parameter of each user link of the radio frequency unit.

In a first possible implementation manner of the first aspect, the determining, by the controller, the transmit power range of the radio frequency unit of the first AP includes: determining, by the controller, a second AP having a maximum received signal strength indicator RSSI value for receiving a signal from the radio frequency unit; obtaining, by the controller, an average attenuation value between the first AP and the second AP; and determining, by the controller, the transmit power range of the radio frequency unit according to the average attenuation value and a preset power threshold of the first AP.

In combination with the first aspect or the first possible implementation manner of the first aspect, in a second possible implementation manner, before determining the packet reception and transmission parameter of each user link of the radio frequency unit, the method further includes: configuring, by the controller, a preset transmit power for the radio frequency unit, so that the radio frequency unit sends a packet by using the preset transmit power, where the preset transmit power is within the transmit power range.

In a second aspect, a method for controlling a transmit power in a wireless network includes: receiving, by an access point AP, a transmit power range of a radio frequency unit of the AP sent by a controller; determining, by the AP, a packet reception and transmission parameter of each user link of the radio frequency unit according to packet reception and transmission information of the radio frequency unit; and configuring, by the AP, a transmit power for each user link of the radio frequency unit within the transmit power range according to the packet reception and transmission parameter.

In a first possible implementation manner of the second aspect, before the determining, by the AP, the packet reception and transmission parameter of each user link of the radio frequency unit according to the packet reception and transmission information of the radio frequency unit, the method further includes: determining, by the AP, a preset transmit power within the transmit power range; and transmitting, by the AP, a packet on the radio frequency unit by using the preset transmit power.

In a third aspect, a controller includes: a power range determining unit, adapted to determine a transmit power range of a radio frequency unit of a first access point AP; a parameter determining unit, adapted to determine a packet reception and transmission parameter of each user link of the radio frequency unit according to packet reception and transmission information of the radio frequency unit reported by the first AP; and a configuring unit, adapted to receive the transmit power range from the power range determining unit, receive the packet reception and transmission parameter of each user link of the radio frequency unit determined by the parameter determining unit, and configure a transmit power for each user link of the radio frequency unit within the transmit power range according to the determined packet reception and transmission parameter of each user link of the radio frequency unit.

In a first implementation manner of the third aspect, the power range determining unit includes: a second AP determining subunit, adapted to determine a second AP having a maximum received signal strength indicator RSSI value for receiving a signal from the radio frequency unit; an obtaining subunit, adapted to receive the second AP from the second AP determining subunit and obtain an average attenuation value between the first AP and the second AP; and a power range determining subunit, adapted to receive the average attenuation value from the obtaining subunit, and determine the transmit power range of the radio frequency unit according to the average attenuation value and a preset power threshold of the first AP.

In combination with the third aspect or the first possible implementation manner of the third aspect, in a second possible implementation manner, the controller further includes: a pre-configuring unit, adapted to receive the transmit power range from the power range determining unit and configure a preset transmit power for the radio frequency unit, so that the radio frequency unit sends a packet by using the preset transmit power, where the preset transmit power is within the transmit power range.

In a fourth aspect, an access point AP includes: a receiving unit, adapted to receive a transmit power range of a radio frequency unit of the AP sent by a controller; a parameter determining unit, adapted to determine a packet reception and transmission parameter of each user link of the radio frequency unit according to packet reception and transmission information of the radio frequency unit; and a configuring unit, adapted to receive the transmit power range from the receiving unit, receive the packet reception and transmission parameter from the parameter determining unit, and configure a transmit power for each user link of the radio frequency unit within the transmit power range according to the packet reception and transmission parameter.

In a first possible implementation manner of the fourth aspect, the AP further includes: a pre-configuring unit, adapted to determine a preset transmit power within the transmit power range; and a sending unit, adapted to receive the preset transmit power from the pre-configuring unit, and send a packet on the radio frequency unit by using the preset transmit power.

In the present invention, by determining a transmit power range of an AP and dynamically determining a transmit power of the AP on the user link according to a packet reception and transmission situation of each user link of the AP, signal interference between devices in a WLAN is reduced while concurrent data transmission capability of the AP is not reduced, thereby improving system transmission performance of the WLAN.

### BRIEF DESCRIPTION OF DRAWINGS

FIG. 1 is a structural system block diagram of a method for controlling a transmit power in a WLAN according to an embodiment of the present invention;
FIG. 2 is an implementation flowchart of a method for controlling a transmit power in a WLAN according to an embodiment of the present invention;
FIG. 3 is a specific implementation flowchart of a method 201 for controlling a transmit power in a WLAN according to an embodiment of the present invention;
FIG. 4 is a schematic diagram of a transmit power range for a method for controlling a transmit power in a WLAN according to an embodiment of the present invention;
FIG. 5 is a schematic diagram of information interaction for a method for controlling a transmit power in a WLAN according to an embodiment of the present invention;
FIG. 6 is an implementation flowchart of another method for controlling a transmit power in a WLAN according to an embodiment of the present invention;
FIG. 7 is a structural block diagram of a controller according to an embodiment of the present invention;
FIG. 8 is a structural block diagram of a controller according to another embodiment of the present invention;
FIG. 9 is a structural block diagram of an AP according to an embodiment of the present invention;
FIG. 10 is a structural block diagram of an AP according to another embodiment of the present invention;
FIG. 11 is a structural block diagram of hardware of a controller according to an embodiment of the present invention; and
FIG. 12 is a structural block diagram of hardware of an AP according to an embodiment of the present invention.

### DESCRIPTION OF EMBODIMENTS

To make the objective, technical solutions, and advantages of the present invention clearer, the following further describes the present invention in detail with reference to accompanying drawings and embodiments. It should be understood that specific embodiments described herein are merely used for describing the present invention, and are not intended to limit the present invention.

In the embodiments of the present invention, by determining a transmit power range of an AP and dynamically determining a transmit power of the AP on each user link according to a packet reception and transmission situation of each user link of the AP, signal interference between devices in a WLAN is reduced while concurrent data transmission capability of the AP is not affected, thereby improving system transmission performance of the WLAN.

In the embodiments of the present invention, a controller performs TPC on an AP, where the AP for which TPC is performed may be any one AP randomly selected and obtained by the controller from those accessing a WLAN, or may be an AP accessing a controller and suffering from most severe interference, which is not limited herein.

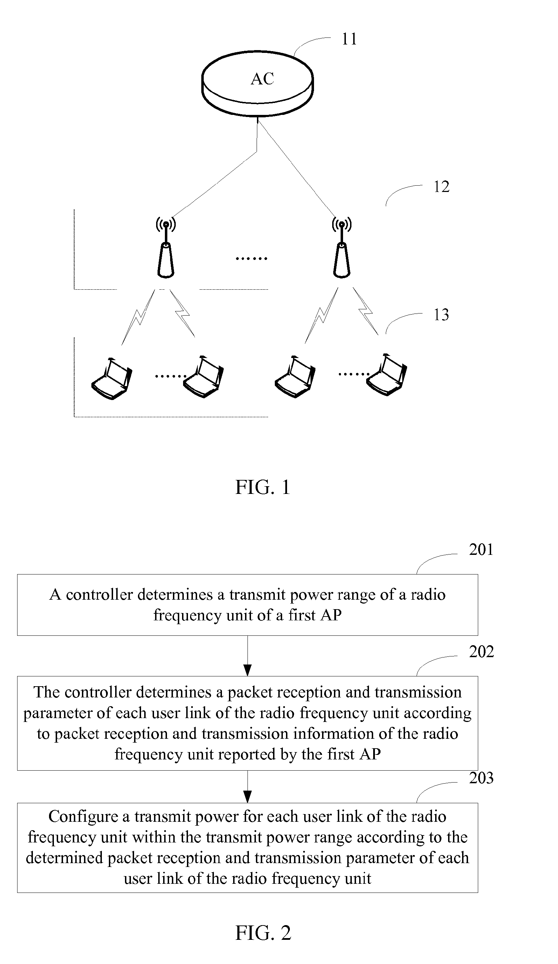

A structural block diagram of a system to which relevant embodiments of the present invention are applicable is shown in FIG. 1. The system is based on the existing WLAN network architecture, and mainly includes an AC 11, APs 12, and stations 13, where the AC 11 is responsible for performing management, control, and service configuration on at least one of the APs 12 accessing a WLAN, and the APs 12 are allowed to be automatically discovered by the AC 11. Specifically, in the embodiments of the present invention, with respect to a case in which an AP 12 covers multiple stations 13, a transmit power may be configured for each user link of the AP 12.

The following describes a method for controlling a transmit power in a WLAN according to an embodiment of the present invention in detail by using a controller as an execution body firstly.

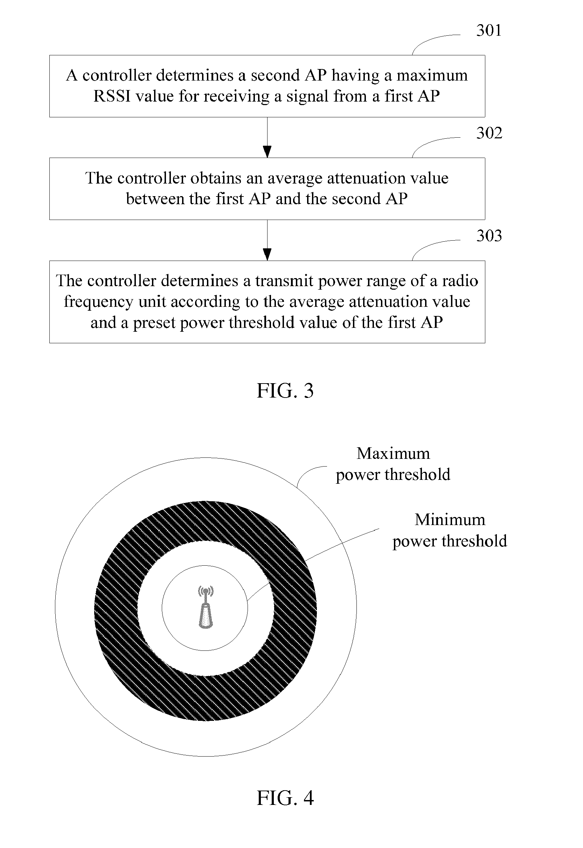

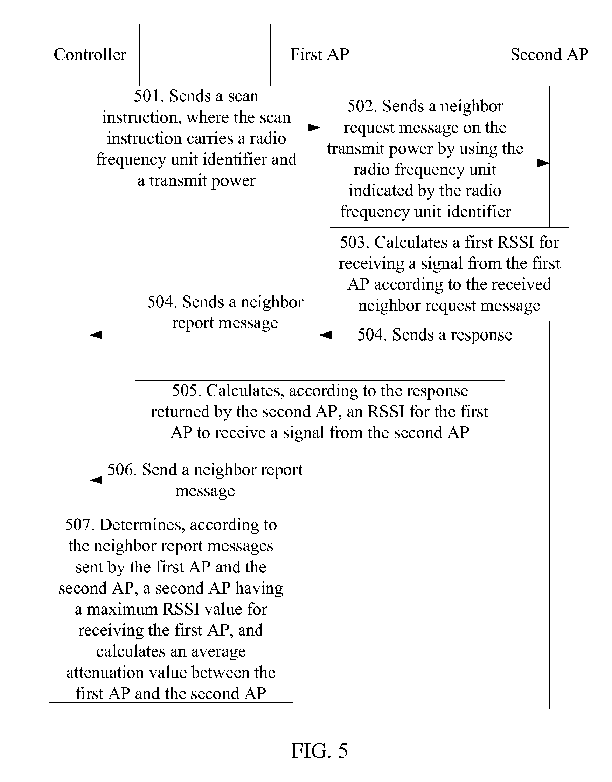

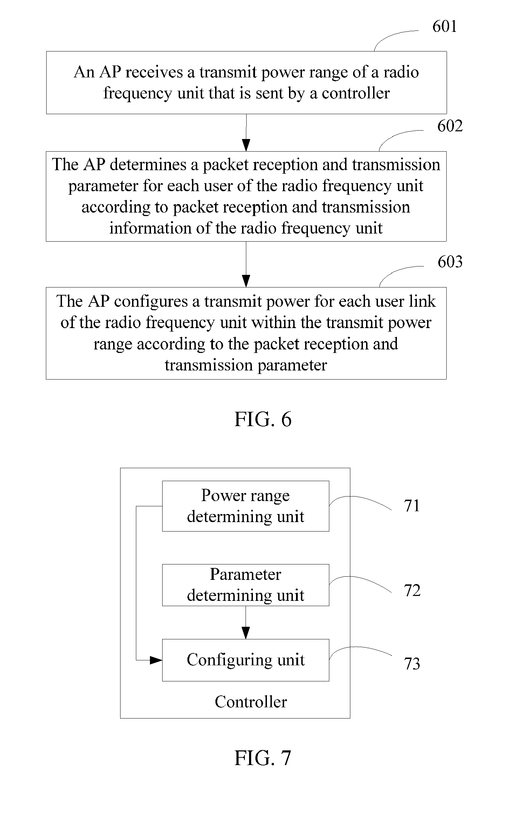

FIG. 2 shows an implementation flowchart of a method for controlling a transmit power in a WLAN according to an embodiment of the present invention. In the embodiment of the present invention, a controller may be located in an AC 11 shown in FIG. 1, and may also be located in a relevant network management device of the WLAN network architecture shown in FIG. 1. The method includes the following steps:
201. A controller determines a transmit power range of a radio frequency unit of a first AP. There may be one or more radio frequency units in one AP, where each radio frequency unit is assigned to operate on a different channel. One radio frequency unit may share apparatuses such as an antenna and a central processing unit (Centre Process Unit, CPU) with other radio frequency units, or has its dedicated apparatuses such as a dedicated antenna and a dedicated CPU. Therefore, in this embodiment, when the AP has only one radio frequency unit, the transmit power range of the AP determined by the controller is the transmit power range of the radio frequency unit; and when the AP has multiple radio frequency units, the controller determines a transmit power range for each radio frequency unit of the AP.
   In this embodiment, the determined transmit power range may be indicated in different forms. For example, {p, x} indicates that a central transmit power of a radio frequency unit is p decibel (Decibel, dB), and transmit powers of different user links may be fluctuated up and down by x dB based on the central transmit power. For another example, [s, e] indicates that a maximum transmit power of a radio frequency unit is e dB, and a minimum transmit power is s dB, so that a transmit power of a user link may be within s dB and e dB. Meanwhile, the transmit power range may also be indicated in a transmit power level. For example, a transmit power is divided into 10 levels, where level 1 is the highest and corresponds to a transmit power 20 decibel milliwatt (Decibel Milliwatt, dBm), level 10 is the lowest 10 dBm, and every two levels are different by 1 dBm, so that the transmit power range may be indicated by a transmit power level range, and then the power level is mapped to a specific transmit power, which is not defined one by one herein.
   In this embodiment, the transmit power range of the radio frequency unit of the first AP may be determined according to an interference situation and an overlapping coverage situation between the first AP and one or more other second APs, and a specific method for determining the transmit power range is described in detail in the following embodiment.
202. The controller determines a packet reception and transmission parameter of each user link of the radio frequency unit according to packet reception and transmission information of the radio frequency unit reported by the first AP.
   In this embodiment, the radio frequency unit of the first AP may send a packet on each user link thereof by using an existing transmit power thereof, and alternatively, before step 202, the controller sends a preset transmit power to the radio frequency unit, so that the radio frequency unit sends a packet on each user link thereof by using the preset transmit power, and then the controller receives the packet reception and transmission information of the radio frequency unit reported by the first AP, where the preset transmit power is any transmit power within the transmit power range determined in step 201, for example, a central transmit power within the transmit power range.
   When a station accesses an AP, a connection between the station and the AP is referred to as a user link. In this embodiment, in a process in which the AP sends a packet to various stations over different user links, the AP may periodically report relevant packet reception and transmission information to the controller. According to the received reception and transmission information, the controller may obtain a packet reception and transmission parameter of each user link of the radio frequency unit by calculation, where the packet reception and transmission parameter includes any one of a byte error rate (Byte Error Rate, BER) of the user link, a packet error rate (Packet Error Rate, PER) of the user link, and a total error rate of simultaneously receiving and transmitting a packet by the user link and other user links.
203. Configure a transmit power for each user link of the radio frequency unit within the transmit power range according to the determined packet reception and transmission parameter of each user link of the radio frequency unit.
   In this embodiment, the controller re-configures, according to the packet reception and transmission parameter of the radio frequency unit of the AP, a transmit power for a user link by using which the AP sends a packet. Specifically, the controller may re-configure the transmit power for the user link according to the packet reception and transmission parameter with reference to the following principles:
   (I) A packet reception and transmission parameter is a BER (PER).
      The controller determines whether a BER is greater than a first BER (PER) threshold, and if yes, increases a transmit power for a corresponding user link within the transmit power range. For example, when the BER is greater than the first BER threshold, a transmit power of a user link is increased by 2 dB according to a preset rule; and
      the controller determines whether the BER is smaller than a second BER (PER) threshold, and if yes, decreases a transmit power of a corresponding user link within the transmit power range.
   (II) A packet reception and transmission parameter is a total error rate of simultaneously receiving and transmitting a packet by a user link and other user links.
   The controller obtains, by using reception and transmission statistics information, a total error rate of simultaneously receiving and transmitting a packet by a user link and other user links. When the total error rate is smaller than a first rate threshold, for example, smaller than 2%, indicating that the impact of the user link on other user links is very small, the controller increases the transmit power for the user link within the transmit power range; and when the total error rate is greater than a second rate threshold, for example, greater than 9%, indicating that the impact of the user link on other user links is great, the controller decreases the transmit power for the user link within the transmit power range, thereby reducing interference of the transmit power of the user link on other user links.
   It should be noted that the above principles used as merely an example for describing several cases of re-configuring a transmit power for a user link according to a packet reception and transmission parameter. Actual re-configuration principles may not be limited to the above principles, and an adjust size a transmit power may be preset by a system, and may be determined according to an actual packet reception and transmission situation. The present invention is not limited thereby.
   Therefore, the controller, after re-configuring a transmit power for a user link, sends the re-configured transmit power to the first AP, so that the first AP performs packet transmission on a corresponding user link by using the re-configured transmit power.
   In this embodiment, the controller may dynamically adjust a transmit power for a user link within a determined transmit power range of a radio frequency unit according to a packet transmission situation of each user link of the radio frequency unit, thereby performing fine adjustment to the transmit power, reducing mutual interference between APs without affecting concurrent data transmission capability of an AP, and improving transmission performance of a wireless network.
   In the embodiment of the present invention, specifically, a transmit power range of a radio frequency unit of the AP may be determined according to an interference situation and an overlapping coverage situation between an AP and other APs. FIG. 3 shows a specific implementation flowchart of step 201 in the method 201 for controlling a transmit power in a WLAN according to an embodiment of the present invention, which is described in detail as follows:
301. The controller determines a second AP having a maximum received signal strength indicator (Receive Signal Strength Indicator, RSSI) value for receiving a signal from the first AP.
   In this embodiment, the first AP may send a detect message to each second AP in advance, and the second AP returns a corresponding detect response, so that the controller obtains an RSSI for each second AP to receive a signal from the first AP.
   The second AP may be a neighboring AP of the first AP, that is, the second AP is a peer AP where a radio signal transmitted by the first AP may reach, and or a peer AP where a transmitted signal may reach the first AP.
302. The controller obtains an average attenuation value between the first AP and the second AP.
   The attenuation value may be obtained by subtracting a power corresponding to an RSSI value of an AP receiving a signal from a transmit power of an AP transmitting the signal, and the average attenuation value is an average value after the attenuation value is tested for multiple times in multiple radio frequency signal transmission processes.
   In this embodiment, the average attenuation value obtained by the controller is obtained by measurement by mutually transmitting a radio frequency signal for multiple times between the first AP and the second AP that is determined in 401, and measured values include an attenuation value of a radio frequency signal that is transmitted by the first AP and received by the second AP, and an attenuation value of a radio frequency signal that is transmitted by the second AP and received by the first AP.
303. The controller determines a transmit power range of a radio frequency unit according to the average attenuation value and a preset power threshold of the first AP.
   Specifically, a preset power threshold of an AP may be obtained by a controller according to relevant network configuration information, and a preset power threshold includes a maximum power threshold and a minimum power threshold. With respect to the maximum power threshold, when the AP transmits a radio frequency signal exceeding the maximum power threshold, an AP receiving the radio frequency is seriously interfered and cannot operate properly; while the minimum power threshold indicates a corresponding minimum transmit power when two APs need to overlap coverage in a network deployment plan.
   After the average attenuation value, the maximum power threshold, and the minimum power threshold are obtained, the controller may determine the transmit power range of the AP according to the above three parameters. For example, the transmit power range of the AP may be [Minimum power threshold + Average attenuation value/2, Maximum power threshold - Average attenuation value]. Then, as show in FIG. 4, a shaded portion between the maximum power threshold and the minimum power threshold of the AP is the transmit power range of the AP determined by performing the above step.
   It should be noted that in an actual network operating process, the controller may further adjust a transmit power range based on the above three parameters according to a current network load situation and a real-time interference situation between various APs, which is not limited herein.
   Specifically, FIG. 5 shows a schematic diagram of information interaction for a method for controlling a transmit power in a WLAN, where a second AP having a maximum RSSI value for receiving a signal from a first AP is determined according to packets transmitted and responses returned between a controller, the first AP, and the second AP, thereby obtaining an average attenuation value between the first AP and the second AP. FIG. 5 shows the following steps:
501. A controller sends a scan instruction to a first AP, where the scan instruction carries a radio frequency unit identifier and a transmit power.
   In this embodiment, the scan instruction is used to instruct the first AP to broadcast a neighbor request message to each second AP on a designated transmit power and a designated radio frequency unit, where the designated transmit power in the scan instruction may include transmit powers at one or more levels, for example, a maximum transmit power and a common transmit power (a half of the maximum transmit power). When the designated transmit power in the scan instruction is multiple levels, the first AP needs to send a neighbor request message by using the designated radio frequency unit on the transmit powers of multiple levels.
   In this embodiment, the controller may send a scan instruction to all APs within a scope controlled thereby, and as an embodiment of the present invention, the scan instruction, besides including the transmit power and the radio frequency unit identifier that are designated by the controller for the first AP, may further include an AP identifier, and indicate a scan duration. The AP identifier is used to identify a virtual AP on the first AP in a scenario in which one physical AP is configured with multiple virtual APs. The scan duration is used to indicate a broadcast duration for the first AP to send a neighbor request message. Because the first AP does not learn how many second APs exist, the first AP is prevented from performing broadcasting for a long period of time by indicating the scan duration.
502. The first AP sends a neighbor request message to each second AP on the transmit power by using the radio frequency unit indicated by the radio frequency unit identifier.
   The first AP, on receipt of the scan instruction from the controller, switches a working state thereof from a normal data transmission state to a neighbor detection state, and broadcasts a neighbor request message to second APs according to the scan instruction. The neighbor request message sent by the first AP carries a basic service set identifier (Basic Service Set Identifier, BSSID) of the first AP and a transmit power for the first AP to send the neighbor request message (that is, the transmit power designated in the scan instruction).
503. The second AP, according to the received neighbor request message, calculates a first RSSI for receiving a signal from the first AP.
   The second AP, on receipt of the neighbor request message from the first AP, calculates and obtains, according to a received signal power and the transmit power carried in the neighbor request message for the first AP to transmit the neighbor request message, the first RSSI for receiving the signal from the first AP.
504. The second AP sends a response to the first AP, and sends a neighbor report message to the controller.
   The response sent to the first AP may carry a BSSID and a transmit power of the second AP, so that the first AP calculates, according to the transmit power and a power of a received signal from the second AP, an RSSI for the first AP to receive a signal from the second AP. In another aspect, the second AP sends the neighbor report message to the controller, where the neighbor report message carries the BSSID of the first AP, the transmit power, and a channel identifier which are obtained by the second AP from the neighbor request message, and the BSSID of the second AP and the received signal strength indicator for the second AP to receive a signal from the first AP.
   In this embodiment, the second AP may return a corresponding response message to the first AP and send the neighbor report message to the controller by using a system default transmit power. If a transmit power range is configured for the second AP, the second AP may also send them by using a maximum transmit power determined by the transmit power range.
505. The first AP calculates, according to the response returned by the second AP, an RSSI for the first AP to receive a signal from the second AP.
506. The first AP sends a neighbor report message to the controller.
   The neighbor report message sent by the first AP carries the BSSID and radio frequency unit identifier of the first AP, the BSSID and radio frequency unit identifier of the second AP, and the RSSI for the first AP to receive a signal from the second AP.
507. The controller, according to the neighbor report messages sent by the first AP and the second AP, determines a second AP having a maximum RSSI value for receiving the first AP, and calculates an average attenuation value between the first AP and the second AP.
   It should be noted that with respect to one AP, when the controller designates multiple channels and transmit powers of multiple levels, the AP needs to broadcast a neighbor request message to neighboring APs thereof on all designated channels by using each designated transmit power.
   In the embodiments of the present invention, by determining a transmit power range of an AP and dynamically determining a transmit power of the AP on each user link according to packet reception and transmission information of each user link of the AP, signal interference between devices in a WLAN is reduced while concurrent data transmission capability of the AP is not affected, thereby improving system transmission performance of the WLAN.
   In addition, as an embodiment of the present invention, the controller may also directly send the transmit power range determined in step 201 to the first AP, so that the first AP may configure a transmit power for a user link for sending a packet according to packet reception and transmission information of the first AP. Specific implementation principles are described in detail in an embodiment where an AP is an execution body as shown in FIG. 6.
   The following describes a method for controlling a transmit power in a WLAN according to an embodiment of the present invention in detail by using an AP as an execution body.
   FIG. 6 shows an implementation procedure for another method for controlling a transmit power in a WLAN according to an embodiment of the present invention. In this embodiment, an execution body of the procedure is an AP, which is described in detail as follows:
601. An AP receives a transmit power range of a radio frequency unit that is sent by a controller.
   In this embodiment, the controller is adapted to determine the transmit power range of the radio frequency unit of the AP according to an interference situation and an overlapping coverage situation between the AP and other APs, and a specific method for determining a transmit power range is described in detail in the specific process of step 201 shown in the above embodiment FIG. 2, and is not described repeatedly herein.
602. The AP determines a packet reception and transmission parameter for each user in the radio frequency unit according to packet reception and transmission information of the radio frequency unit.
   In this embodiment, in a process in which the AP sends a packet to various stations over different user links, relevant packet reception and transmission information may be obtained. The AP may calculate and obtain a packet reception and transmission parameter of each user link of the radio frequency unit according to the packet reception and transmission information, where the packet reception and transmission parameter includes any one of a BER of the user link, a PER of the user link, and a total error rate of simultaneously receiving and transmitting a packet by the user link and other user links.
603. The AP configures a transmit power for each user link of the radio frequency unit within the transmit power range according to the packet reception and transmission parameter.
   In this embodiment, the AP re-configures, according to the packet reception and transmission parameter of the radio frequency unit, a transmit power for a user link for the radio frequency unit to send a packet. For details about the transmit power re-configuration for the user link according to the packet reception and transmission parameter, reference may be made to the following principles.
   (I) A packet reception and transmission parameter is a BER (PER).
      The AP determines whether a BER is greater than a first BER (PER) threshold, and if yes, increases a transmit power for a corresponding user link within the transmit power range. For example, when the BER is greater than the first BER threshold, a transmit power of a user link is increased by 2 dB according to a preset rule; and
      the AP determines whether the BER is smaller than a second BER (PER) threshold, and if yes, decreases a transmit power of a corresponding user link within the transmit power range.
   (II) A packet reception and transmission parameter is a total error rate of simultaneously receiving and transmitting a packet by a user link and other user links.
   The AP obtains, by using packet reception and transmission information, a total error rate of simultaneously receiving and transmitting a packet by a user link and other user links. When the total error rate is smaller than a first rate threshold, for example, smaller than 2%, indicating that the impact of the user link on other user links is very small, the AP increases the transmit power for the user link within the transmit power range; and when the total error rate is greater than a second rate threshold, for example, greater than 9%, indicating that the impact of the user link on other user links is great, the AP decreases the transmit power for the user link within the transmit power range, thereby reducing interference of the transmit power of the user link on other user links.

It should be noted that the above principles used as merely an example for describing several cases of re-configuring a transmit power for a user link according to a packet reception and transmission parameter. Actual re-configuration principles may not be limited to the above principles, and an adjust size a transmit power may be preset by a system, and may be determined according to an actual packet reception and transmission situation. The present invention is not limited thereby.

In this embodiment, after step 601 and before step 602, preferably, the AP may determine a preset transmit power within the transmit power range determined by the controller, for example, a central transmit power within the transmit power range, thereby sending a packet by using the preset transmit power, where when the AP has multiple radio frequency units, the AP uses the preset transmit power to send a packet on a radio frequency unit corresponding to the preset transmit power.

In this embodiment, a difference from the embodiment illustrated in FIG. 2 according to the present invention lies in that, because the AP determines the packet reception and transmission parameter according to the packet reception and transmission information, and configures the transmit power for the user link according to the packet reception and transmission parameter, information interaction between the controller and the AP is efficiently reduced. For relevant implementation principles of this embodiment, reference may be made to the embodiment illustrated in FIG. 2 of the present invention, which are not described repeatedly herein.

FIG. 7 shows a structural block diagram of a controller according to an embodiment of the present invention, where the controller is adapted to execute the method for controlling a transmit power according to the embodiments illustrated in FIG. 2 to FIG. 5. For the convenience of description, only parts relevant to the embodiments are shown. As shown in FIG. 7, the controller includes a power range determining unit 71, a parameter determining unit 72, and a configuring unit 73.

The power range determining unit 71 determines a transmit power range of a radio frequency unit of a first AP.

In this embodiment, when the AP has only one radio frequency unit, the transmit power range of the AP determined by the controller is the transmit power range of the radio frequency unit; and when the AP has multiple radio frequency units, the controller determines a transmit power range for each radio frequency unit of the AP.

In this embodiment, the transmit power range of the radio frequency unit of the first AP may be determined according to an interference situation and an overlapping coverage situation between the first AP and one or more other second APs, and a specific method for determining the transmit power range is described in detail in the following embodiment. The parameter determining unit 72 determines a packet reception and transmission parameter of each user link of the radio frequency unit according to packet reception and transmission information of the radio frequency unit reported by the first AP.

In this embodiment, the radio frequency unit of the first AP may send a packet on each user link thereof by using an existing transmit power thereof, or the controller sends a preset transmit power to the radio frequency unit, so that the radio frequency unit sends a packet on each user link thereof by using the preset transmit power, and then the controller receives the packet reception and transmission information of the radio frequency unit reported by the first AP, where the preset transmit power is any transmit power within the transmit power range determined by the power range determining unit 81, for example, a central transmit power within the transmit power range.

In this embodiment, in a process in which the AP sends a packet to various stations over different user links, the AP may periodically report relevant packet reception and transmission information to the controller. According to the received reception and transmission information, the controller may obtain a packet reception and transmission parameter of each user link of the radio frequency unit by calculation, where the packet reception and transmission parameter includes any one of a BER of the user link, a PER of the user link, and a total error rate of simultaneously receiving and transmitting a packet by the user link and other user links.

The configuring unit 73 receives the transmit power range from the power range determining unit 71, receives the determined packet reception and transmission parameter of each user link of the radio frequency unit from the parameter determining unit 72, and configures a transmit power for each user link of the radio frequency unit within the transmit power range according to the determined packet reception and transmission parameter of each user link of the radio frequency unit.

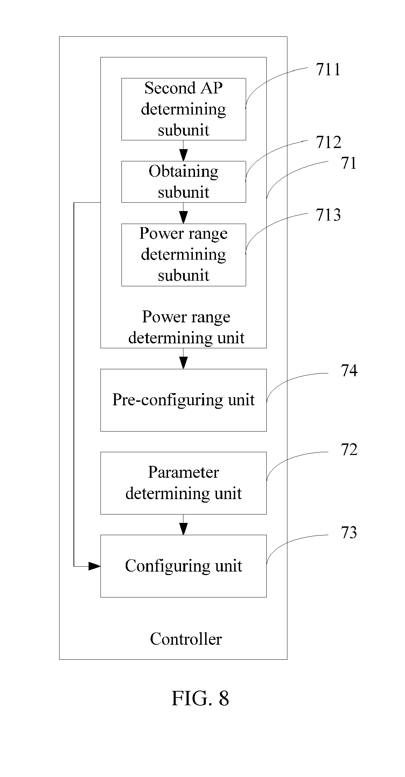

In this embodiment, the controller re-configures, according to the packet reception and transmission parameter of the radio frequency unit of the AP, a transmit power for a user link by using which the AP sends a packet. Specifically, for details about the transmit power re-configuration performed by the AP for a user link according to the packet reception and transmission parameter, reference may be made to relevant principles described in the embodiment illustrated in FIG. 2 of the present invention. Moreover, the relevant principles described in the embodiment illustrated in FIG. 2 of the present invention are used as merely an example for describing various cases of re-configuring a transmit power for a user link according to a packet reception and transmission parameter, and actual re-configuration principles may not be limited to the above principles, and an adjust size a transmit power may be preset by a system, or be determined according to an actual packet reception and transmission situation, and the present invention is not intended to be limited thereby. Alternatively, as shown in FIG. 8, the power range determining unit 71 includes a second AP determining subunit 711, an obtaining subunit 712, and a power range determining subunit 713.

The second AP determining subunit 711 determines a second AP having a maximum RSSI value for receiving a signal from a radio frequency unit.

In this embodiment, a first AP may send a detect message to each second AP in advance, and the second AP returns a corresponding detect response, so that the controller obtains an RSSI for each second AP to receive a signal from the first AP.

The obtaining subunit 712 receives the second AP from the second AP determining subunit 711, and obtains an average attenuation value between the first AP and the second AP.

In this embodiment, the average attenuation value obtained by the controller is obtained by measuring radio frequency signals that are mutually transmitted for multiple times between the first AP and the second AP that is determined by the second AP determining subunit 711, and measured values include an attenuation value of a radio frequency signal that is transmitted by the first AP and received by the second AP, and an attenuation value of a radio frequency signal that is transmitted by the second AP and received by the first AP.

The power range determining subunit 713 receives the average attenuation value from the obtaining subunit 712, and determines a transmit power range of the radio frequency unit according to the average attenuation value and a preset power threshold of the first AP. Specifically, the preset power threshold of the AP may be obtained by the controller according to relevant network configuration information, and the preset power threshold includes a maximum power threshold and a minimum power threshold. After the average attenuation value, the maximum power threshold, and the minimum power threshold are obtained, the controller may determine the transmit power range of the AP according to the above three parameters. For example, the transmit power range of the AP may be [minimum power threshold + average attenuation value/2, maximum power threshold - average attenuation value].

Alternatively, the controller further includes:
a pre-configuring unit 74, which receives the transmit power range from the power range determining unit 71, and configures a preset transmit power for the radio frequency unit, so that the radio frequency unit sends a packet by using the preset transmit power, where the preset transmit power is within the transmit power range.

Alternatively, the packet reception and transmission parameter includes any one of a BER of the user link, a PER of the user link, and a total error rate of simultaneously receiving and transmitting a packet by the user link and other user links.

Alternatively, the controller is located in an access controller AC.

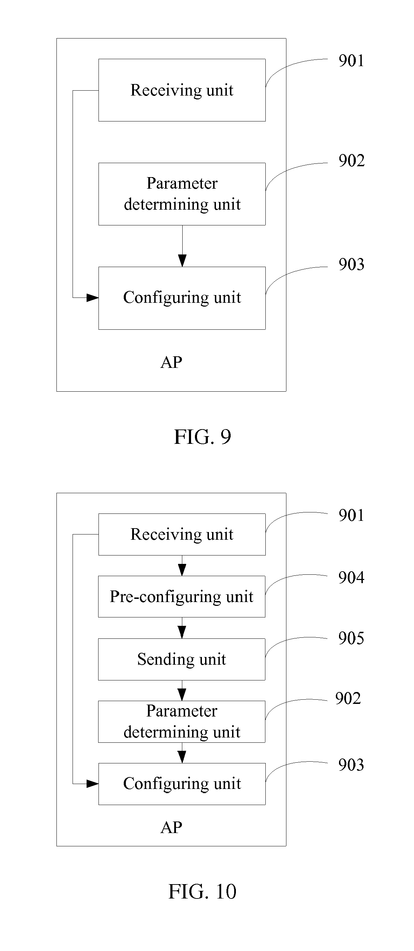

FIG. 9 shows a structural block diagram of an AP according to an embodiment of the present invention, where the AP is adapted to execute the method for controlling a transmit power according to the embodiment illustrated in FIG. 6. For the convenience of description, only parts relevant to the embodiments are shown.

As shown in FIG. 9, the AP includes a receiving unit 901, parameter determining unit 902, and a configuring unit 903.

The receiving unit 901 receives a transmit power range of a radio frequency unit of the AP that is sent by a controller.

In this embodiment, the controller is adapted to determine the transmit power range of the radio frequency unit of the AP according to an interference situation and overlapping coverage situation between the AP and other APs. A specific method for determining the transmit power range is described in detail in the specific process of 301 shown in the embodiment illustrated in FIG. 4, and is not described repeatedly herein.

The parameter determining unit 902 determines, according to packet reception and transmission information of the radio frequency unit, a packet reception and transmission parameter of each user link of the radio frequency unit.

In this embodiment, in a process in which the AP sends a packet to various stations by using different user links, relevant packet reception and transmission information may be obtained. The AP may calculate and obtain a packet reception and transmission parameter of each user link of the radio frequency unit according to the packet reception and transmission information, where the packet reception and transmission parameter includes any one of a BER of the user link, a PER of the user link, and a total error rate of simultaneously receiving and transmitting a packet by the user link and other user links.

The configuring unit 903 receives the transmit power range from the receiving unit 901, receives the packet reception and transmission parameter from the parameter determining unit 902, and configures a transmit power for each user link of the radio frequency unit within the transmit power range according to the packet reception and transmission parameter.

In this embodiment, the AP re-configures, according to the packet reception and transmission parameter of the radio frequency unit, a transmit power for a user link for the radio frequency unit to send a packet. Specifically, for details about the transmit power re-configuration for the user link according to the packet reception and transmission parameter, reference may be made to the relevant principles described in the embodiment illustrated FIG. 6 of the present invention, which are not described repeatedly herein.

Alternatively, as shown in FIG. 10, the AP further includes:
a pre-configuring unit 904, which determines a preset transmit power within the transmit power range; and
a sending unit 905, which receives the preset transmit power from the pre-configuring unit 904, and sends a packet on the radio frequency unit by using the preset transmit power.

In this embodiment, the AP may determine a preset transmit power within the transmit power range determined by the controller, for example, a central transmit power within the transmit power range, thereby sending a packet by using the preset transmit power, where when the AP has multiple radio frequency units, the AP uses the preset transmit power to send a packet on a radio frequency unit corresponding to the preset transmit power.

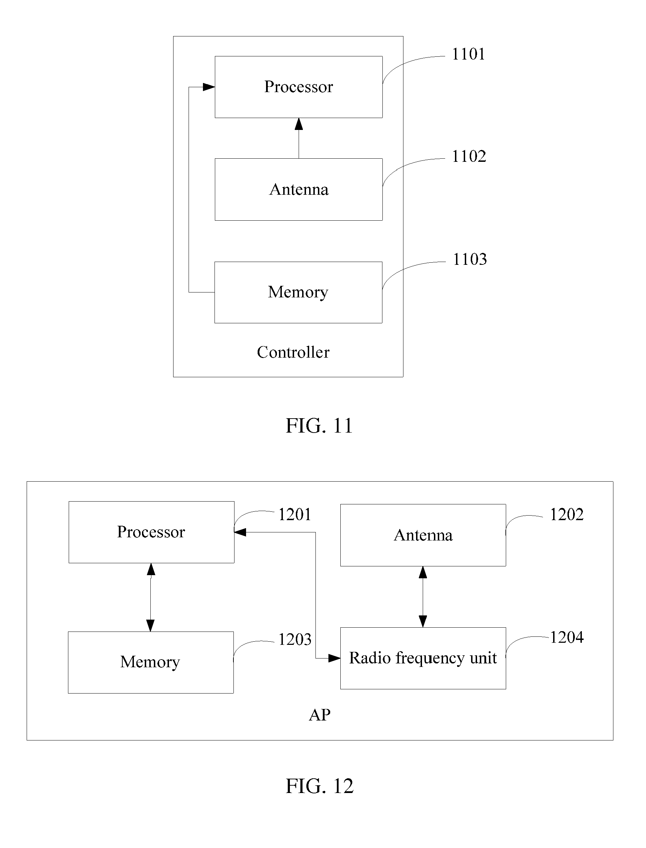

FIG. 11 shows a hardware structural block diagram of a controller according to an embodiment of the present invention, where the controller is adapted to execute the method for controlling a transmit power according to the embodiments illustrated FIG. 2 to FIG. 5. For the convenience of description, only parts relevant to the embodiments are shown. As shown in FIG. 11, the controller includes a processor 1101, an antenna 1102, and a memory 1103, where the processor 1101 and the memory 1103 may be connected by using a bus or by other means, and the memory 1103 has program code stored therein, and the program code includes computer operation instructions. The processor 1101 executes the program code, and is adapted to:
determine a transmit power range of a radio frequency unit of a first access point AP; determine a packet reception and transmission parameter of each user link of the radio frequency unit according to packet reception and transmission information of the radio frequency unit reported by the first AP; and configure a transmit power for each user link of the radio frequency unit within the transmit
power range according to the determined packet reception and transmission parameter of each user link of the radio frequency unit. The antenna 1102 is adapted to receive the packet reception and transmission information of the radio frequency unit reported by the first AP.

The memory 1103 is further adapted to store the packet reception and transmission information of the radio frequency unit reported by the first AP. Alternatively, the processor 1101 is further adapted to determine a second AP having a maximum RSSI value for receiving a signal from the radio frequency unit, obtain an average attenuation value between the first AP and the second AP, and determine a transmit power range of the AP according to the average attenuation value and a preset power threshold of the AP.

Alternatively, the processor 1101 is further adapted to configure a preset transmit power for the radio frequency unit, so that the radio frequency unit sends a packet by using the preset transmit power, where the preset transmit power is within the transmit power range. Alternatively, the packet reception and transmission parameter includes any one of a BER of the user link, a PER of the user link, and a total error rate of simultaneously receiving and transmitting a packet by the user link and other user links.

Alternatively, the controller is located in an access controller AC.

FIG. 12 shows a hardware structural block diagram of an AP according to an embodiment of the present invention, where the AP is adapted to perform the method for controlling a transmit power according to the embodiment illustrated in FIG. 6. For the convenience of description, only parts relevant to the embodiments are shown. As show in FIG. 12, the AP includes a processor 1201, an antenna 1202, a memory 1203, and a radio frequency unit 1204, where the processor 1201 and the memory 1203 may be connected by using a bus or by other means; the memory 1203 has program code stored therein, and the program code includes computer operation instructions; and the radio frequency unit 1204 is responsible for loading a radio frequency signal of a transmit power designated by the processor 1201, transmitting the radio frequency signal over the antenna 1202, and sending a data signal received by the antenna 1202 to the processor 1201 for processing.

The antenna 1202 is adapted to receive a transmit power range of the radio frequency unit 1204 of the AP sent by a controller.

The processor 1201 executes the program code, and is adapted to:
determine a packet reception and transmission parameter of each user link of the radio frequency unit 1204 according to packet reception and transmission information of the radio frequency unit 1204.

The memory 1203 is further adapted to store the packet reception and transmission information of the radio frequency unit 1204 and the packet reception and transmission parameter of each user link of the radio frequency unit 1204.

The processor 1202 is further adapted to configure, according to the packet reception and transmission parameter, a transmit power for each user link of the radio frequency unit 1204 within the transmit power range received by the antenna 1202. Alternatively, the processor 1201 is further adapted to determine a preset transmit power within the transmit power range. The radio frequency unit 1204 is specifically adapted to load a radio frequency signal according to the preset transmit power determined by the processor 1201 within the transmit power range, and transmit the radio frequency signal over the antenna 1202.

Alternatively, the packet reception and transmission parameter includes any one of a BER of the user link, a PER of the user link, and a total error rate of simultaneously receiving and transmitting a packet by the user link and other user links.

In the embodiments of the present invention, by determining a transmit power range of an AP and dynamically determining a transmit power of the AP on a user link according to a packet reception and transmission situation of each user link of the AP, signal interference between devices in a WLAN is reduced, thereby improving system transmission performance of the WLAN.

The above are merely exemplary embodiments of the present invention. However, the scope of the present invention is not limited thereto. All modifications, equivalent replacements, and improvements made without departing from the present invention shall fall within the scope of the present invention.

## Claims

1. A method for controlling a transmit power in a wireless local area network, comprising:
determining, by a controller, a transmit power range of a radio frequency unit of a first access point, AP;
determining, by the controller, a packet reception and transmission parameter of each user link of the radio frequency unit according to packet reception and transmission information of the radio frequency unit reported by the first AP; and
configuring, by the controller, a transmit power for each user link of the radio frequency unit within the transmit power range according to the determined packet reception and transmission parameter of each user link of the radio frequency unit.

2. The method according to claim 1, wherein the determining, by the controller, a transmit power range of a radio frequency unit of a first AP comprises:
determining, by the controller, a second AP having a maximum received signal strength indicator, RSSI, value for receiving a signal from the radio frequency unit;
obtaining, by the controller, an average attenuation value between the first AP and the second AP; and
determining, by the controller, the transmit power range of the radio frequency unit according to the average attenuation value and a preset power threshold of the first AP.

3. The method according to claim 1 or 2, wherein before the determining the packet reception and transmission parameter of each user link of the radio frequency unit, further comprising:
configuring, by the controller, a preset transmit power for the radio frequency unit, so that the radio frequency unit sends a packet by using the preset transmit power, wherein the preset transmit power is within the transmit power range.

4. A method for controlling a transmit power in a wireless network, comprising:
receiving, by an access point, AP, a transmit power range of a radio frequency unit of the AP that is sent by a controller;
determining, by the AP, a packet reception and transmission parameter of each user link of the radio frequency unit according to packet reception and transmission information of the radio frequency unit; and
configuring, by the AP, a transmit power range for each user link of the radio frequency unit within the transmit power range according to the packet reception and transmission parameter.

5. The method according to claim 4, wherein before the determining, by the AP, a packet reception and transmission parameter of each user link of the radio frequency unit according to packet reception and transmission information of the radio frequency unit, the method further comprises:
determining, by the AP, a preset transmit power within the transmit power range; and
sending, by the AP, a packet on the radio frequency unit by using the preset transmit power.

6. A controller, comprising:
a power range determining unit, adapted to determine a transmit power range of a radio frequency unit of a first access point, AP;
a parameter determining unit, adapted to determine a packet reception and transmission parameter of each user link of the radio frequency unit according to packet reception and transmission information of the radio frequency unit reported by the first AP; and
a configuring unit, adapted to receive the transmit power range from the power range determining unit, receive the determined packet reception and transmission parameter of each user link of the radio frequency unit from the parameter determining unit, and configure a transmit power for each user link of the radio frequency unit within the transmit power range according to the determined packet reception and transmission parameter of each user link of the radio frequency unit.

7. The controller according to claim 6, wherein the power range determining unit comprises:
a second AP determining subunit, adapted to determine a second AP having a maximum received signal strength indicator, RSSI, value for receiving a signal from the radio frequency unit;
an obtaining subunit, adapted to receive the second AP from the second AP determining subunit, and obtain an average attenuation value between the first AP and the second AP; and
a power range determining subunit, adapted to receive the average attenuation value from the obtaining subunit, and determine the transmit power range of the radio frequency unit according to the average attenuation value and a preset power threshold of the first AP.

8. The controller according to claim 6 or 7, further comprising:
a pre-configuring unit, adapted to receive the transmit power range from the power range determining unit, and configure a preset transmit power for the radio frequency unit, so that the radio frequency unit sends a packet by using the preset transmit power, wherein the preset transmit power is within the transmit power range.

9. An access point, AP, comprising:
a receiving unit, adapted to receive a transmit power range of a radio frequency unit of the AP that is sent by a controller;
a parameter determining unit, adapted to determine a packet reception and transmission parameter of each user link of the radio frequency unit according to packet reception and transmission information of the radio frequency unit; and
a configuring unit, adapted to receive the transmit power range from the receiving unit, receive the packet reception and transmission parameter from the parameter determining unit, and configure a transmit power for each user link of the radio frequency unit within the transmit power range according to the packet reception and transmission parameter.

10. The AP according to claim 9, further comprising:
a pre-configuring unit, adapted to determine a preset transmit power within the transmit power range; and
a sending unit, adapted to receive the preset transmit power from the pre-configuring unit, and send a packet on the radio frequency unit by using the preset transmit power.
